(19) Europäisches Patentamt
European Patent Office
Office européen des brevets

(11) EP 1 118 057 B1

(12) **EUROPEAN PATENT SPECIFICATION**

(45) Date of publication and mention
of the grant of the patent:
**27.11.2002 Bulletin 2002/48**

(21) Application number: **99940344.7**

(22) Date of filing: **20.08.1999**

(51) Int Cl.[7]: **G06F 17/10**

(86) International application number:
**PCT/GB99/02715**

(87) International publication number:
**WO 00/014649 (16.03.2000 Gazette 2000/11)**

(54) **SIGNAL PROCESSING**

SIGNALVERARBEITUNG

TRAITEMENT DU SIGNAL

(84) Designated Contracting States:
**AT BE CH CY DE DK ES FI FR GB GR IE IT LI LU MC NL PT SE**

(30) Priority: **03.09.1998 EP 98307088**

(43) Date of publication of application:
**25.07.2001 Bulletin 2001/30**

(73) Proprietor: **WALLAC OY**
**20101 Turku (FI)**

(72) Inventors:
• **HOBSON, Anthony Cavendish Laboratory Cambridge CB3 0HE (GB)**
• **LASENBY, Anthony Cavendish Laboratory Cambridge CB3 0HE (GB)**

(74) Representative: **Haley, Stephen**
**Gill Jennings & Every,**
**Broadgate House,**
**7 Eldon Street**
**London EC2M 7LH (GB)**

(56) References cited:
• ZHAOJING ZHOU ET AL: "A FAST MEM ALGORITHM VOR HIGH RESOLUTION DIRECTION SPECTRUM ESTIMATION" MEASUREMENT, vol. 18, no. 3, July 1996 (1996-07), pages 159-167, XP000639117
• HOBSON M P ET AL: "The entropic prior for distributions with positive and negative values" MONTHLY NOTICES OF THE ROYAL ASTRONOMICAL SOCIETY, 11 AUG. 1998, BLACKWELL SCIENCE FOR R. ASTRON. SOC, UK, vol. 298, no. 3, pages 905-908, XP002094232 ISSN 0035-8711
• BURCH S F ET AL: "Image restoration by a powerful maximum entropy method" COMPUTER VISION, GRAPHICS, AND IMAGE PROCESSING, AUG. 1983, USA, vol. 23, no. 2, pages 113-128, XP002094233 ISSN 0734-189X

**Description**

The present invention relates to the reconstruction of signals. There are many applications, such as radar, sonar, acoustic data, spectroscopy, geophysical, and image signal processing, in which it is desirable to reconstruct signals from given data.

In many of these situations the effect on the signals of noise and the particular characteristic of the system generating the signal are known or can be approximated using appropriate mathematical models. In these situations, Bayesian reconstruction methods have often been applied to reconstruct the signal from given data. These methods can work well. For example one Bayesian reconstruction approach, known as the maximum entropy method, is known to work well. Usually, the maximum entropy method (MEM), is only be applied to the reconstruction of signals that are strictly non-negative, and which are not complex. Given this, it is generally not possible to change the basis in any vector space representing the data during any reconstruction. Being unable to do this results in computationally very expensive reconstruction processes having to be employed, because of the requirement for very large calculations having an extremely large number of variables to be determined.

For example, employment of such an MEM to a stack of twenty images from a microscope takes in the region of fifty minutes using a standard INTEL™ Pentium™ 200MHz processor.

The present invention is directed towards improving the reconstruction of signals from given data so that such reconstruction can be performed within a reduced time frame.

According to the present invention there is provided a method of reconstructing a technical signal from a given set of data, with a prediction function representing a predictable effect on the signal, and a noise function representing unpredictable noise, the method comprising the steps of:

> altering the coordinate basis of the data and signal from an original coordinate basis in order to produce a prediction function having a reduced set of variables;
> performing a Bayesian reconstruction capable of operation of positive, negative, and complex signal values to produce a reconstruction signal; and
> converting the reconstruction signal back into the original coordinate basis to generate a signal.

The Bayesian reconstruction may be performed using a Fourier basis, or may use a wavelet basis.

The Bayesian reconstruction may employ the maximum entropy method, in which case the method may employ an evaluation parameter, $\propto$, which may be determined from a prior reconstruction, set at a fixed value, or determined during the reconstruction step.

The signal to be reconstructed may be an image signal, or may be a radar, sonar, or acoustic data signal. Alternatively, it may be a signal from spectroscopy or a geophysical signal.

By employing the method of the present invention, an example stack of 20 microscope images takes approximately 45 seconds to reconstruct using a standard INTEL™ Pentium™ 200 MH$^z$ processor.

One example of the present invention will now be described.

Bayesian reconstruction methods have been applied to numerous problems in a wide variety of fields. In their standard form, however, they can be very computationally intensive, since they generally require the numerical maximisation of a complicated function of many variables. For example, in image reconstruction problems, it is not unusual for the number of variables to be $\sim 10^6$. Furthermore, one of the most popular Bayesian reconstruction algorithms is the maximum-entropy method (MEM), which can only by applied to the reconstruction of signals that are strictly non-negative (see below). The method can, however, be extended to signals that can take both positive and negative values. We develop the MEM approach so that it can be applied to the reconstruction of signals that can take positive, negative or complex values. As a result, this enables the use of similarity transformations in the reconstruction algorithm so that calculations can be performed in an alternative "basis" this is more appropriate to the problem under consideration. Specifically, the basis is chosen so that signal is reconstructed by performing a large number of numerical maximisations of low dimensionality, rather than a single maximisation of high dimensionality. This results in a significant increase in speed. Indeed, in the example outlined below, the speed of the reconstruction algorithm is increased by a factor of about 100.

The standard Bayesian reconstruction techniques mentioned above are typically applied to a given data set $d(y)$ in order to reconstruct some underlying signal $s(x)$. Here, y denotes the space over which the data are defined and x denotes the space of the signal, which may in general be distinct from x and need not have the same number of dimensions. For example, given some data stream $d(t)$, which consists of the measured values of some quantity as a function of time t, we may wish to reconstruct the two-dimensional spatial variation of some other quantity (or signal) $s(x,y)$.

For most measurements it is convenient (or necessary) to digitise the data and the signal (for example if either is to be stored/analyzed on a digital computer). We may therefore denote the data by the vector d with $N_d$ components, where $N_d$ is the number of data samples. Similarly, we denote the signal by the vector s of length $N_s$, where $N_s$ is the number of points at which we wish to reconstruct the signal.

In general, we may express the data vector as some function $\Theta$ of the signal vector, i.e.

$$d=\Theta(s)$$

The function $\Theta$ can be non-linear and specifies the effect of the measuring apparatus on the signal that we wish to reconstruct. It is customary to divide this function into the predictable effect of the measuring apparatus on the signal and the stochastic noise part due to inherent inaccuracies in the measurement process. In this case, we may write

$$d = \Phi'(s) + \varepsilon, \tag{1}$$

Where $\Phi$ denotes the predictable response of the apparatus to the signal and $\varepsilon$ is a vector of length $N_d$ that contains any stochastic noise contributions to the data.

The Bayesian approach to reconstructing the signal is to calculate the estimator $\hat{s}$ that maximises the posterior probability Pr(sd). This is given by Bayes' theorem as

$$Pr(s|d) = \frac{Pr(d|s)Pr(s)}{Pr(d)},$$

where Pr(d|s) is the likelihood of obtaining the data given the signal, Pr(s) is the prior probability, and the evidence Pr(d) can be considered merely as a normalisation constant. Thus, in order to obtain the (Bayesian estimator of the signal vector, we must maximise the product the product Pr(d|s) P(s) of the likelihood function and the prior. A thorough discussion of Bayesian analysis techniques is given by Sivia (1996).

The likelihood function describes the statistics of noise contribution $\varepsilon$ to the data. This function may take any form appropriate to the noise statistics. It is convenient to define the log-likelihood function L(s) = ln[Pr(d|s)] so that the likelihood function may be written as Pr(d|s) = exp[L(s)]. As an example, if the noise on the data is Gaussian-distributed and described by the noise covariance matrix N, then the likelihood function takes the form

$$\begin{aligned} Pr(d|s) &\propto \exp\left[-\tfrac{1}{2}\varepsilon^T N^{-1}\varepsilon\right] \\ &\propto \exp\left[-\tfrac{1}{2}(d - \Phi(s))^T N^{-1}(d - \Phi(s))\right], \end{aligned} \tag{2}$$

where in the second line we have used (1). In this case, the log-likelihood function is simply minus one half of the standard $\chi^2$ misfit statistic, i.e.

$$L(s) = -\frac{1}{2}\chi^2(s).$$

The prior distribution Pr(s) codifies our knowledge of the underlying signal before acquiring the data. If we have some advance knowledge of the statistical properties of the signal then this is contained in the prior. For example, if we assume the signal to be described by a Gaussian random field with a covariance matrix C, then the prior takes the form

$$Pr(s) \propto \exp(-\frac{1}{2}s^T C^{-1}s).$$

Indeed, if the prior is assumed to have this form and the likelihood is also Gaussian, as in (2), then the Bayesian estimator S is obtained by maximising their product is identical to the standard Wiener filter solution. An introduction to the Wiener filter technique is given by Press et al (1994).

It is clear, however, that although the noise contribution $\varepsilon$ to the data may often be Gaussian-distributed, the assumption of a Gaussian form for the prior is not valid for a general signal. If the joint probability distribution of the elements of the signal vector is known then it should be used as the prior. This is almost always impossible, however, and we instead investigate the assignment of a prior applicable to general signals that is based on information-theoretic considerations alone. Using very general notions of subset independence, coordinate invariance and system independence, it may be shown that the prior probability Pr(s) should take the form

$$Pr(s) \propto \exp[\alpha S(s,m)], \qquad (3)$$

Where the dimensional constant $\alpha$, depends on the scaling of the problem and may be considered as a regularising parameter, and m is a model to which the Bayesian reconstruction defaults in the absence of any data and is usually set to a small constant value. The function S(s, m) is the cross-entropy of the signal and model vectors and is given by

$$S(\mathbf{s}, \mathbf{m}) = \sum_{n=1}^{N_s} \left[ s_n - m_n - s_n \ln \left( \frac{s_n}{m_n} \right) \right], \qquad (4)$$

Where $N_s$, is the length of the (digitised) signal vector. A derivation of this result is given by Skilling (1988). By combining the entropic prior with the likelihood function, the Bayesian estimator of the signal is found by maximising with respect to s the posterior probability, which now takes the form

$$Pr(s|d) \propto \exp[L(s)]\exp[\alpha S(s,m)] = \exp(L(s) + \alpha S(s,m)).$$

Thus, maximising this probability distribution is equivalent to maximising the function

$$F(s) = L(s) + \alpha S(s, m), \qquad (5)$$

and this forms the basis of the maximum entropy method (MEM).

The maximum-entropy method has been applied to a wide range of signal reconstruction problems. In its standard form, however, it can by very computationally intensive. The function F(s) is in general a complicated function of the components $s_n$ of the signal vector and so a numerical maximisation of the F(s) must be perform over this $N_s$-dimensional space. It is not unusual for $N_s$ to be of the order $N_s$ - $10^6$, particularly in image reconstruction problems. Moreover, the standard MEM approach is only applicable to signals that are strictly non-negative, as is clear from the presence of the logarithmic term in the expression (4) for the entropy.

Nevertheless, it is possible to extend the MEM so that it can be applied to the reconstruction of signals that can take both positive and negative values. The definition of the entropy for positive/negative signals with certain special properties was first presented by Gull & Skilling (1990). The generalisation to arbitrary positive/negative signals and the derivation of the prior probability in this case is given by Hobson & Lasenby (1998). It is found that the prior has the same form as given (3) but the expression for the entropy S(s, m) must be modified. The central idea is to express the general (positive/negative) signal vector s as the difference of two vectors u and v containing only strictly non-negative distributions, i.e.

$$s=u-v$$

By applying continuity constraints on the entropy functional it is possible that the expression for the entropy for the positive/negative signal s is given by

$$S(s, m_u, m_v) = \sum_{n=1}^{N_s} \left\{ \psi_n - (m_u)_n - (m_v)_n - s_n \ln \left[ \frac{\psi_n + s_n}{2(m_u)_n} \right] \right\}, \qquad (6)$$

Where $m_u$ and $m_v$ are separate models for u and v respectively, and where $\psi_n = [s^2_n + 4(M_u)_n(M_v)_n]^{1/2}$. We cannot hope to replace the models $m_u$ and $m_v$ by a single positive/negative model $m_s$ (say), since such a distribution could no longer be considered as an integration measure. Nevertheless, we can still consider the difference $m_u$ - $m_v$ as the model for the signal s. We note that the form of the positive/negative entropy derived by Gull & Skilling (1990)

requires $m_u = m_v$.

Given the entropic prior for general positive/negative signals, it is then straightforward to define the prior for complex signals simply by applying the above analysis to the real and imaginary parts separately. In this case the models $M_u$ and $M_v$ are also taken to be complex. The read and imaging parts of $m_u$ are the models for the positive portions of the real and imaginary parts of s respectively. Similarly, the real and imaginary parts of $m_v$ are the models for the negative portions of the real and imaginary parts of the image. The total entropy of the complex signal is then obtained by evaluating the sum (6) using first the real parts and then the imaginary parts of s, $m_u$ and $m_v$ and adding the results.

The ability to reconstruct positive/negative and complex distributions using the MEM approach has profound consequences for greatly improving the both the speed and accuracy of the MEM technique. These improvements are based on the idea of making a change of basis in both the signal and data spaces and performing a Bayesian reconstruction in this new basis. With an appropriate choice of the new bases, it is possible to speed up significantly the calculation of the reconstruction, which can then easily be rotated back into the original basis in signal space to obtain the final reconstruction of the signal. For example, the ability to reconstruct complex signals allows us to perform reconstructions in the Fourier basis of complex exponentials, which greatly reduces the computational complexity of de-blurring images that have been convolved with a spatially varying point-spread function (see the example below).

In order to understand how a general change of basis is performed we must first remind ourselves of some basic results in linear algebra and vector (see e.g. Riley, Hobson & Bence 1997). Suppose there exists a set of linearly independent vectors $e^{(n)}$ ($n=1,...,N_s$), that form a complete basis for the $N_s$-dimensional space of the signal vector We may then write the signal vector as a weighted sum of these vectors. Formally, if we take $e^{(n)}$ to be the column vector with unity as the nth element and zeros elsewhere, then we may write the signal vector as

$$s = \sum_{n=1}^{N_s} s_n e^{(n)}.$$

Thus we see that in order to reconstruct the signal vector, we are in fact reconstructuring its coefficients in this trivial basis. We can, however, equally well expand the signal vector in terms of any other linearly independent of set of vectors $e^{(n)'}$ ($n=1,...,N_s$) such that

$$s = \sum_{n=1}^{N_s} s'_n e'^{(n)}.$$

We may perform a similar procedure in the $N_d$-dimensional data space, which is in general distinct from the signal space. If we consider the trivial basis vectors $f^{(n)}$ ($n=1,...,N_d$) in this space, with unity as the nth elements and zeros elsewhere, then the data vector is given by

$$d = \sum_{n=1}^{N_d} d_n f^{(n)}.$$

On performing change of basis in data space to some other basis $f^{(n)'}$, this becomes

$$d = \sum_{n=1}^{N_d} d'_n f'^{(n)}.$$

Since the noise vector $\varepsilon$ also belongs to the data space a similar change of basis can apply to it, such that

$$\epsilon = \sum_{n=1}^{N_d} \epsilon_n f^{(n)} = \sum_{n=1}^{N_d} \epsilon'_n f'^{(n)}.$$

It is clear that, even if the element $s_n$ of the signal vector in the original basis were strictly non-negative, the elements $s'_n$ in the new basis will in general take both positive and negative values. Furthermore, in the case where the new basis vectors have complex components, the coefficients $s'_n$ may themselves be complex. Hence it is the extension of the MEM technique to the reconstruction of such quantities that allows this approach to be taken.

Once we have performed the changes of basis in the data and signal spaces, we denote the vectors with components $s'_n$ by s' and we similarly define the vectors d' and $\varepsilon'$ as those containing the elements $d'_n$ and $\varepsilon'_n$ respectively. In the signal space we can relate the two bases $e^{(n)}$ and $e'^{(n)}$ (n=1,...,$N_s$) by

$$e'^{(n)} = \sum_{i=1}^{N_s} U_{in} e^{(i)}$$

where $U_{in}$ is the ith component of $e'^{(n)}$ with respect to the original (unprimed) basis. The vector s' and s are then related by

$$s = Us' \qquad (7)$$

Similar results hold for the bases $f^{(n)}$ and $f'^{(n)}$ (n = 1, ,$N_d$) in data space, such that

$$d = Vd' \qquad (8)$$

Where the element $V_{in}$ is the with component of $f'_{(n)}$ with respect to the unprimed basis. A similar expression exists relating the noise vectors $\varepsilon'$ and $\varepsilon$. Substituting (7) and (8) and (1), we then obtain

$$d' = \Phi'(s') + \varepsilon', \qquad (9)$$

Where $\Phi'$ is a new function relating the signal and data vectors in the new basis.

Clearly, our aim is to choose the new bases in the data and signal spaces in order that the relationship (9) takes the simplest form. More formally, we wish to perform similarity transformations in the data and signal spaces that partition each space into numerous (quasi-) disjoint subspaces of much lower dimensionality. In such bases, we may then calculate the estimate s' of the rotated signal vector by performing numerical maximisations in each subspace separately. Thus, we replace a single maximisation over the $N_s$-dimensional signal space in the original basis by numerous low-dimensionality maximisations over each subspace in the new basis. This leads to a considerable increase in the speed with which the reconstruction can be performed. Then, having calculated the Bayesian reconstruction s; in the new basis, the required signal reconstruction s can be obtained by rotating back to the original signal-space basis. We reiterate that, since the elements $S_m$ in the new basis can in general take positive, negative or even complex values, it is the extension of the MEM technique to the reconstruction of such quantities that allows this approach to be taken.

As an example, let us consider the application of the above Bayesian reconstruction technique to the deconvolution of images that have been blurred by a spatially-invariant point-spread function (PSF) and that may also contain some noise contribution. For simplicity, we will assume that the de-blurred reconstruction is produced on the same pixelisation as the blurred image, although this is clearly not required by the technique in general. In this simple case, the data and signal spaces coincide.

It is well known that the convolution of an underlying image with a spatially invariant PSF is equivalent to multiplying together their Fourier transforms and then performing an inverse Fourier transform. Therefore, in the Fourier domain, each Fourier mode can be considered independently of the others. This suggests that we should perform the Bayesian reconstruction in the Fourier basis, such that

$$s'_n = \sum_{m=1}^{N_s} \exp(-i\pi n(m-1)/N_s)s_m.$$

With a similar expression relating the components of the data vectors d' and d and the noise vectors ε and ε' (Since the data and signal spaces coincide). Thus, in this case, the $N_s$-dimensional signal (and data) space has been partitioned into $N_s$ separate disjoint spaces (i.e. one for each Fourier mode).

Now for each value of n (or Fourier mode), we may consider the elements $d'_n$, $s'_n$ and $\varepsilon'_n$ independently of those for other values of n. This leads to a substantial decrease in the CPU time required to de-blur a given image. For simplicity, at our chosen Fourier mode we denote $d'_n$, $s'_n$ and $e'_n$ by d', s' and ε' respectively. The quantity d' is given simply by the Fourier coefficient of the true underlying image, or signal s', multiplied by the Fourier coefficient of the PSF, or response R. In addition, a noise contribution, ε' , in the Fourier domain may also be present. If is no instrumental errors are expected from a given apparatus, it is still possible to introduce "noise" by, for example, digitising an image in order to store it on a computer. Thus the data value is given by

$$d' = Rs' + \varepsilon' \tag{10}$$

Since we are performing the reconstruction in the Fourier basis, the noise on each Fourier mode will contain contributions from a wide range of scales. Therefore, provided the noise on the image is distributed in a statstically-homogeneous manner, we would expect from the central limit thereon that the noise in the Fourier domain is described reasonably well by a Gaussian distribution. Therefore, the likelihood function is given by

$$\Pr(d'|s') \propto \exp(-|d' - Rs'|^2/\sigma^2),$$

where $\sigma^2 = \langle \varepsilon'\varepsilon'^* \rangle'$ is the variance of the noise contribution at the particular Fourier mode under consideration. From (6), the entropy S(s', m) of this complex "image" may be shown to be given by (where we have set $m_u = m_u = m$)

$$S(s,m) = \Re(\psi) - 2\Re(m) - \Re(s')\ln\left[\frac{\Re(\psi+s')}{2\Re(m)}\right] + \Im(\psi) - 2\Im(m) - \Im(s')\ln\left[\frac{\Im(\psi)+\Im(s')}{2\Im(m)}\right],$$

where the $\Re$ and $\Im$ denote the real or imaginary part respectively of a complex number; also $\Re(\psi) = [\Re(s')^2 + 4(\Re)(m)^2]^{1/2}$ and a similar expression exists for $\Im(\psi)$.

Using the above expression for the likelihood and prior, and assuming a particular value for the regularising parameter α in (5), it is then possible numerically to maximise the posterior probability to obtain the estimator $\hat{s}'$ of the signal vector at each Fourier mode independently. Once these estimators have been calculated for all the Fourier modes, we simply perform an inverse Fourier transform to recover the de-blurred image, i.e.

$$\hat{s}_n = \frac{1}{N_s} \sum_{m=1}^{N_s} \exp(+i\pi n(m-1)/N_s)\hat{s}'_m.$$

The value of α used in the reconstruction algorithm may be set in three different ways. Firstly, α may be set such that the misfit statistic $\chi^2$, between the observed data and that predicted from the reconstruction, is equal to its expectation value, i.e. the number of data points to be fitted. This choice is usually referred to as "historic" MEM. Alternatively, it is possible to determine the appropriate value for α in a fully Bayesian manner (Skilling 1989) by simply treating it as another parameter in our hypothesis space. This is the recommended choice and is usually referred to as "classic" MEM. Finally, the simplest option is to fix α in advance to some value. This option is unlikely to yield optimal results. It can, however, be used to obtain a quick solution if the historic or classic value for α has already been determined for a particular problem on a previous occasion.

The above technique has been applied to several different data sets in which an image has been convolved with a spatially-invariant point-spread function. For example, the "classic" de-blurring of a microscope image of a section through a pollen grain. The section has dimensions 128 x 128 and is taken from a three dimensional "stack" of 20 such images. The original stack had been blurred by a spatially invariant three dimensional PSF and the de-blurred reconstruction of the entire stack required approximately 45 seconds on an Intel Pentium 200 $MH_z$ processor. A standard MEM algorithm, which does not use the similarity transformation technique was also applied to this stack of images. This produced reconstructions of a similar quality to those obtained using the invention, but required approximately 50 minutes CPU time on the same machine.

Similar gains in speed can be obtained by expanding the signal in different bases appropriate to the given problem, so long as the correlation matrix of the resulting coefficients of the data, signal and noise vectors in the new bases is relatively sparse. For example, similar results may be obtained by reconstructing the coefficients in a wavelet expansion (Daubechie 1992) of the signal as opposed to the Fourier expansion used above. This case has the advantage that the coefficients are always real. Furthermore, the scaling/translation properties of the wavelet transform allow automatic multi-resolution reconstructions of the signal vector.

Clearly, the general method outlined above can be applied to numerous different reconstruction problems of arbitrary dimensionality. Examples include the analysis of acoustic data, radar, underwater sonar, spectroscopy, geophysical data, oil exploration and medical imaging. In addition to spatial dimensions, additional dimensions such as time, spectral behavior and polarisation are also easily accommodated.

## Claims

1. A method of reconstructing a technical signal from a given set of data, with a prediction function representing a predictable effect on the signal, and a noise function representing unpredictable noise, the method comprising the steps of:

   altering the coordinate basis of the data and signal from an original coordinate basis in order to produce a prediction function having a reduced set of variables;
   performing a Bayesian reconstruction capable of operation of positive, negative, and complex signal values to produce a reconstruction signal; and
   converting the reconstruction signal back into the original coordinate basis to generate a signal.

2. A method according to claim 1, wherein the Bayesian reconstruction is performed using a Fourier basis.

3. A method according to claim 1, wherein the Bayesian reconstruction is performed using a wavelet basis.

4. A method according to any preceding claim, wherein the Bayesian reconstruction employs the maximum entropy method.

5. A method according to claim 4, employing an evaluation parameter, $\propto$, which is determined from a prior reconstruction.

6. A method according to claim 4, employing an evaluation parameter, $\propto$, which is set at a fixed value.

7. A method according to claim 4, employing an evaluation parameter, $\propto$, which is determined during the reconstruction step.

8. A method according to any of claims 1 to 7, in which the signal to be reconstructed is an image signal.

9. A method according to claim 8, wherein the image signal is a medical image signal.

10. A method according to any of claims 1 to 7, in which the signal to be reconstructed is a radar signal.

11. A method according to any of claims 1 to 7, in which the signal to be reconstructed is an acoustic data signal.

12. A method according to claim 11, wherein the acoustic data signal is an underwater sonar signal.

13. A method according to claim 11, wherein the acoustic data signal is a geophysical data signal.

14. A method according to any of claims 1 to 7, in which the signal to be reconstructed is a signal from spectroscopy.

**15.** A method according to any one of claims 1 to 7, in which the signal is a communication signal, such as a time-series signal.

**Patentansprüche**

**1.** Verfahren zum Rekonstruieren eines technischen Signals aus einem gegebenen Datensatz mit einer Prädiktionsfunktion, die eine vorhersehbare Wirkung auf das Signal repräsentiert, und einer Rauschfunktion, die nicht vorhersehbares Rauschen repräsentiert, wobei das Verfahren die folgenden Schritte umfaßt:

Ändern der Koordinatenbasis der Daten und des Signals von einer ursprünglichen Koordinatenbasis, um eine Prädiktionsfunktion mit einem reduzierten Satz von Variablen zu erzeugen;
Durchführen einer Bayesschen Rekonstruktion, die zur Verarbeitung positiver, negativer und komplexer Signalwerte geeignet ist, um ein Rekonstruktionssignal zu erzeugen; und
Umwandeln des Rekonstruktionssignals zurück in die ursprüngliche Koordinatenbasis, um ein Signal zu erzeugen.

**2.** Verfahren gemäß Anspruch 1, bei welchem die Bayessche Rekonstruktion unter Verwendung einer Fourier-Basis durchgeführt wird.

**3.** Verfahren gemäß Anspruch 1, bei welchem die Bayessche Rekonstruktion unter Verwendung einer Wavelet-Basis durchgeführt wird.

**4.** Verfahren gemäß einem vorhergehenden Anspruch, bei welchem die Bayessche Rekonstruktion die Maximalentropiemethode verwendet wird.

**5.** Verfahren gemäß Anspruch 4, welches einen Auswerteparameter $\alpha$ verwendet, der aus einer früheren Rekonstruktion bestimmt wird.

**6.** Verfahren gemäß Anspruch 4, welches einen Auswerteparameter $\alpha$ verwendet, der auf einen festen Wert gesetzt ist.

**7.** Verfahren gemäß Anspruch 4, welches einen Auewerteparametey $\alpha$ verwendet, der während des Rekonstruktionsschritts bestimmt wird.

**8.** Verfahren gemäß einem der Ansprüche 1 bis 7, bei welchem das zu rekonstruierende Signal ein Bildsignal ist.

**9.** Verfahren gemäß Anspruch 8, bei welchem das Bildsignal ein Medizinbildsignal ist.

**10.** Verfahren gemäß einem der Ansprüche 1 bis 7, bei welchem das zu rekonstruierende Signal ein Radarsignal ist.

**11.** Verfahren gemäß einem der Ansprüche 1 bis 7, bei welchem das zu rekonstruierende Signal ein Akustikdatensignal ist.

**12.** Verfahren gemäß Anspruch 11, bei welchem das Akustikdatensignal ein Unterwasserschall-Signal ist.

**13.** Verfahren gemäß Anspruch 11, bei welchem das Akustikdatensignal ein geophysikalisches Datensignal ist.

**14.** Verfahren gemäß einem der Ansprüche 1 bis 7, bei welchem das zu rekonstruierende Signal ein Signal aus der Spektoskopie ist.

**15.** Verfahren gemäß einem der Ansprüche 1 bis 7, bei welchem das Signal ein Kommunikationssignal, so wie ein Zeit-Sequenz-Signal, ist.

**Revendications**

**1.** Procédé de reconstruction d'un signal technique à partir d'un ensemble donné d'informations, avec une fonction de prévision représentant un effet prévisible sur le signal, et une fonction de bruit représentant un bruit non prévisible, le procédé comprenant les étapes consistant à:

altérer la base des coordonnées des informations et du signal à partir d'une base de coordonnées d'origine, pour produire une fonction de prévision présentant un ensemble réduit de variables;
effectuer une reconstruction Bayésienne capable de traiter des valeurs de signal positives, négatives et complexes, pour produire un signal de reconstruction; et
reconvertir le signal de reconstruction dans la base de coordonnées d'origine pour générer un signal.

2. Procédé selon la revendication 1, dans lequel la reconstruction Bayésienne est effectuée en utilisant une base de Fourier.

3. Procédé selon la revendication 1, dans lequel la reconstruction Bayésienne, est effectuée en utilisant une base d'ondelettes.

4. Procédé selon l'une quelconque des revendications précédentes, dans lequel la reconstruction Bayésienne utilise la méthode par entropie maximale.

5. Procédé selon la revendication 4, utilisant un paramètre d'évaluation, $\alpha$, qui est déterminé à partir d'une reconstruction antérieure.

6. Procédé selon la revendication 4, utilisant un paramètre d'évaluation, $\alpha$, qui est établi à une valeur fixe.

7. Procédé selon la revendication 4, employant un paramètre d'évaluation, $\alpha$, qui est déterminé pendant l'étape de reconstruction.

8. Procédé selon l'une quelconque des revendications 1 à 7, dans lequel le signal à reconstruire est un signal d'imagerie.

9. Procédé selon la revendication 8, dans lequel le signal d'image est un signal d'imagerie médicale.

10. Procédé selon l'une quelconque des revendications 1 à 7, dans lequel le signal à reconstruire est un signal de radar.

11. Procédé selon l'une quelconque des revendications 1 à 7, dans lequel 'le signal à reconstruire est un signal d'informations acoustique.

12. Procédé selon la revendication 11, dans lequel le signal d'informations acoustique est un signal de sonnard sous-marin.

13. Procédé selon la revendication 11, dans lequel le signal d'informations acoustique est un signal d'informations géophysiques.

14. Procédé selon l'une quelconque des revendications 1 à 7, dans lequel le signal à reconstruire est un signal fourni par une spectroscopie.

15. Procédé selon l'une quelconque des revendications 1 à 7, dans lequel le signal est un signal de communication, tel qu'un signal en séries temporelles.